# EUROPÄISCHE PATENTSCHRIFT

(11) **EP 1 268 337 B1**
(45) Veröffentlichungstag und Bekanntmachung des Hinweises auf die Patenterteilung: **31.08.2005**
(21) Anmeldenummer: 01909666.8
(22) Anmeldetag: 20.01.2001
(51) Int. Cl.: B66F 3/12

(54) **WAGENHEBER**
JACK
CRIC

(30) Priorität: 27.03.2000 DE 10014767
(43) Veröffentlichungstag der Anmeldung: 02.01.2003
(73) Patentinhaber: ThyssenKrupp Bilstein GmbH, 58256 Ennepetal (DE)
(72) Erfinder: ALTEN, Ferdinand, 54429 Mandern (DE)
(86) Internationale Anmeldenummer: PCT/EP2001/000630
(87) Internationale Veröffentlichungsnummer: WO 2001/072627

(56) Entgegenhaltungen:
- EP-A- 0 396 233
- EP-A- 0 585 733
- DE-A- 2 621 426
- DE-U- 9 418 720
- GB-A- 1 322 426
- US-A- 3 693 937

## Beschreibung

Die Erfindung betrifft einen Wagenheber mit einem konvex bogenförmigen Adapterkopf nach dem Oberbegriff des Anspruchs 1.

Bei Wagenhebern, insbesondere bei gattungsgemäßen Wagenhebern, die eine Standsäule aufweisen, an denen schwenkbeweglich ein Tragarm angebracht ist, der mit seinem freien Ende in eine Ausnehmung oder unter eine Ausnehmung bzw. unter eine Anlagefläche im oder am anzuhebenden Fahrzeug greift, besteht die Problematik, dass eine relative Schwenkbewegung zwischen dem Ende des Tragarms und dem Fahrzeug auszugleichen ist. Darüber hinaus muss sichergestellt sein, dass das Ende des Tragarms lagefixiert am anzuhebenden Fahrzeug zum Eingriff kommt. Um dieses Ziel zu erreichen, gibt es verschiedene Formen der Anbindung, wie schwenkbewegliche Einsteckdorne, schwenkbewegliche Anlageplatten oder auch die Ausbildung des freien Endes mit einem konvex bogenförmigen Adapterkopf, wie dieses in der DE 94 18 720 U1 gezeigt wird.

Die Ausbildung eines Adapterkopfes nach der DE 94 18 720 U1 bringt zwar eine gewisse Freiheit zum Ausgleich der Winkelverschiebung zwischen Wagenheber und anzuhebendem Fahrzeug. Diese Ausbildung weist jedoch den Nachteil auf, dass der bogenförmige Adapterkopf in keiner Weise horizontal unter dem Fahrzeugboden bzw. Schweller gehalten wird. Von daher besteht die Gefahr, dass der Wagenheber beim oder nach dem Anheben des Fahrzeuges abrutscht und das Fahrzeug aus der angehobenen Position herunterfällt, was zu schwersten Verletzungen bei der Bedienperson führen kann.

Ein Wagenheber mit den Merkmalen des Oberbegriffs des Patentanspruchs 1 ist aus der EP 0 585 733 A2 bekannt. Bei diesem bekannten Wagenheber ist der konvex bogenförmige Adapterkopf als starres Bauteil mit einer kugelförmigen Oberfläche ausgebildet. Bei derartigen Adapterköpfen ist es erforderlich, dass die Bedienperson den Wagenheber bzw. den Adapterkopf in der richtigen Winkelstellung unter dem Fahrzeugboden ansetzt. Erfolgt das Ansetzen des Wagenhebers bzw. des Adapterkopfes nicht im richtigen Winkel, so besteht die Gefahr, dass der Wagenheber den Wagen nicht ordnungsgemäß anhebt, sodass es zu einer Gefährdung der Bedienperson kommen kann (Abrutschen des Fahrzeugs).

Der Erfindung liegt die Aufgabe zu Grunde, eine einfache, eindeutige und sichere Fixierung des bogenförmigen Adapterkopfes unter dem Schweller oder dem Boden des anzuhebenden Fahrzeuges zu schaffen. Ferner soll erreicht werden, dass die Bedienperson den Wagenheber einfacher ansetzen kann.

Diese Aufgabe wird erfindungsgemäß mit den Merkmalen des Anspruchs 1 gelöst. Vorteilhafte Aus- und Weiterbildungen sind in den Ansprüchen 2 bis 5 beschrieben.

Die mit der Erfindung erzielten Vorteile bestehen insbesondere darin, dass mit einfachen Mitteln eine gute Lagefixierung eines Wagenhebers unter dem anzuhebenden Fahrzeug erzielt wird. Insbesondere bei der Ausbildung nach den Ansprüchen 2, 5 oder 7 wird darüber hinaus erreicht, dass auch eine Fixierung des Wagenhebers in Fahrzeuglängsrichtung erreicht wird. Darüber hinaus vorteilhaft wird bei der Ausbildung insbesondere nach Anspruch 3 erreicht, dass die Bedienungsperson, die meist ungeübt ist, da bei der heutigen Fahrzeugtechnik nur noch äußerst selten ein Wagenheber verwendet werden muss, keine Maßnahmen mehr ergreifen muss, um ein schwenkbares Teil in der richtigen Winkelstellung unter dem Fahrzeugboden anzusetzen.

Ein Ausführungsbeispiel der Erfindung ist in der Zeichnung dargestellt und wird im Folgenden näher beschrieben. Es zeigen
sowohl die Fig. 1 als auch die Fig. 2 einen Gelenkarmwagenheber in der Ansicht und die Fig. 3 und 4 vergrößerte Darstellungen von als Adapterkopf verwendeten Rollen.

Beim Wagenheber nach dem Ausführungsbeispiel handelt es sich um einen Einarmgelenkwagenheber mit einem schwenkbar angelenkten Fuß. Derartige Wagenheber weisen, wie in beiden Fig. dargestellt, einen Standkörper, bestehend aus einer Standsäule 1, an deren Aufstandsende schwenkbeweglich ein Fuß 2 angelenkt ist, auf. Der Fuß 2 steht mit seiner Aufstandsfläche auf dem Untergrund 3. Im oberen Bereich der Standsäule 1 ist ebenfalls schwenkbeweglich ein Tragarm 4 angelenkt. Am freien Ende 5 des Tragarms 4 ist ein Tragelement angebracht.

Die Standsäule 2 und der Tragarm 4 sind über eine Bewegungsspindel 6 miteinander verbunden. Eine im Ausführungsbeispiel schwenkbeweglich am oberen Ende 7 der Standsäule angebrachte Bewegungsmutter 8 bewirkt, dass beim Drehen der Bewegungsspindel 6, die üblicherweise mit einer Handkurbel 9 ausgebildet ist, der Tragarm 4 gegenüber der Standsäule 1 verschwenkt wird, wodurch ein Heben oder Senken des freien Endes 5 des Tragarms 4 und damit des Fahrzeuges gegenüber dem Untergrund 3 bewirkt wird.

Beim Ausführungsbeispiel ist am freien Ende 5 des Tragarms 4 eine drehbare Rolle 10 über eine Achse 11 am Tragarm 4 angebracht. Der Tragarm 4 hat, wie üblich, einen U-förmigen Querschnitt und ist aus Blech hergestellt. Dieses Blech läuft am freien Ende 5 in nicht mehr durch einen Boden verbundene Seitenschenkel aus.

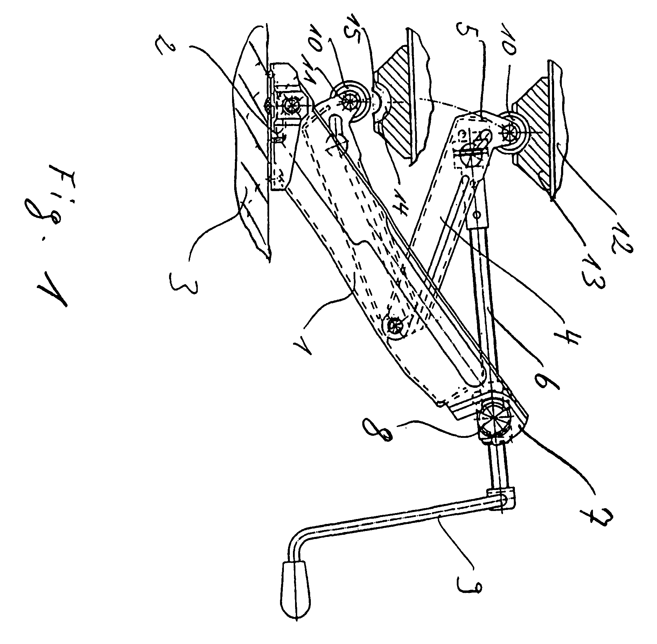

Bei der Ausbildung gemäß Fig. 1 ist eine Rolle 10 zwischen den Seitenschenkeln des Tragarms 4 angeordnet. Die Achse 11 durchdringt diese Seitenschenkel und ist an ihnen befestigt.

Unter dem Schweller bzw. dem Boden 12 ist ein Aufnahmeteil 13 angebracht, das eine entsprechend dem Außenradius der Rolle 10 konkav ausgebildete Ausnehmung 14 aufweist. Links und rechts dieser Ausnehmung 14 sind zwei Wände 15 vorgesehen, sodass sich eine Tasche mit einem bogenförmigen Grund ergibt.

In beiden Figuren ist der Tragarm 4 in zwei Hubpositionen dargestellt. Die untere Lage des Tragarms 4 zeigt den Wagenheber in Ansetzposition. Es ist erkennbar, dass in dieser Position die Rolle 10 frei unter das Aufnahmeteil 13 geschoben werden kann. Mit Anheben des Tragarms 4 fasst die Rolle 10 in die Ausnehmung 14. Durch weiteres Anheben des Tragarms 4 wird auch das Fahrzeug angehoben, wie dieses in der oberen Position des Tragarms 4 gezeigt ist. Bei dieser Stellung des Wagenhebers ist das zu wechselnde Rad vom Untergrund 3 angehoben und kann gewechselt werden.

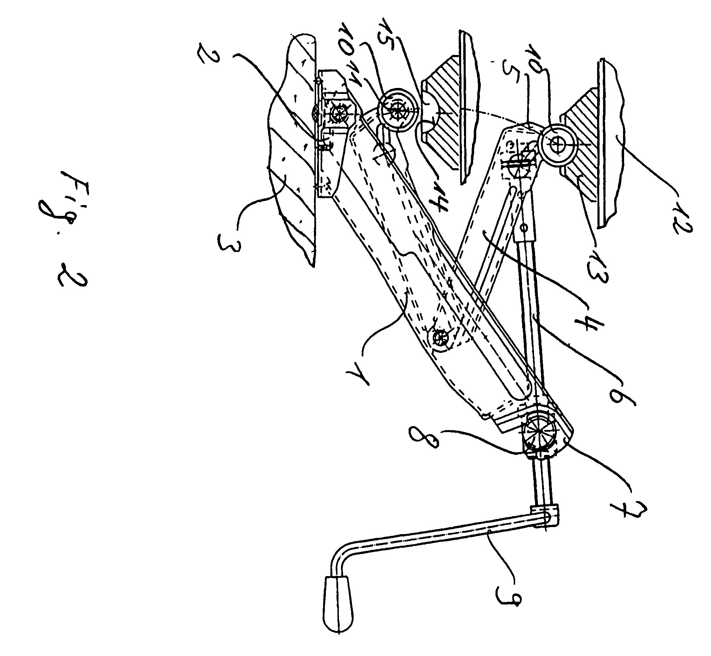

In Fig. 2 sind am freien Ende 5 des Tragarms 4 beidseitig außen zwei Rollen 10 angebracht. Diese Rollen 10 haben somit einen Abstand zueinander. Die hintere Rolle ist nicht erkennbar, da beide Rollen 10 gleich groß sind und somit die hintere Rolle durch die vordere Rolle verdeckt wird.

Bei der Ausbildung eines Schwenkarms mit zwei Rollen, wie in Fig. 2 gezeigt, gestaltet sich die Ausbildung des Aufnahmeteils 13 dergestalt einfacher, als seine Ausnehmung 14 nur durch einen Mittelsteg 16 getrennt wird. Dieser Mittelsteg 16 greift beim Anlegen des Wagenhebers mit seinen Rollen 10 in das Aufnahmeteil 13 in den Zwischenraum zwischen die beiden hintereinander liegenden Rollen 10.

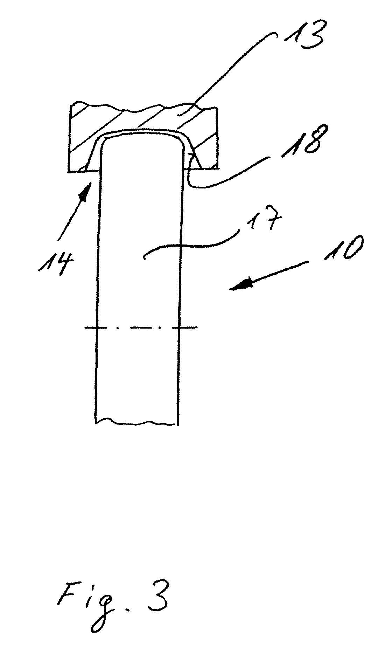

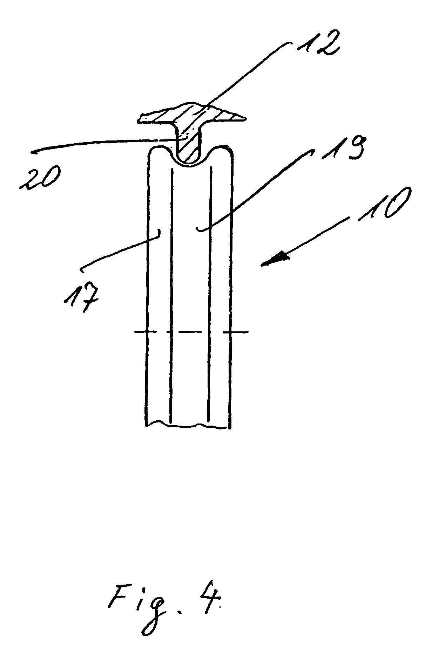

In den Fig. 3 und 4 sind einzelne, am Ende 5 des Tragarms 4 angeordnete Rollen 10 entsprechend der Anordnung in Fig. 1 im Detail dargestellt. Die Rolle 10 entsprechend Fig. 3 weist eine ballige Lauffläche 17 auf und greift mit dieser Lauffläche 17 in eine Ausnehmung 14 ein, deren Querkontur wie dargestellt ausgebildet ist. Der Boden der Ausnehmung 14 ist eben oder, wie dargestellt, geringfügig konkav ausgebildet, sodass es zwischen der Lauffläche 17 der Rolle 10 und dem Boden zu einer Punktberührung kommt. Die Seiten 18 der Ausnehmung 14 sind konisch nach außen geneigt. Dadurch wird erreicht, dass auch bei Schrägstellung des Wagenhebers es zu keiner Zwängung zwischen den Außenflächen der Rolle 10 und den Seiten 18 der Ausnehmung 14 kommt. Durch diese Form der Wagenheberaufnahme am Fahrzeug wird vorteilhaft erreicht, dass keine Momente insbesondere in den Tragarm 4 des Wagenhebers eingeleitet werden, auch wenn der Wagenheber auf einem unebenen Untergrund 3 aufsteht und somit nicht senkrecht zum Boden 12 des Fahrzeuges zu stehen kommt.

Der gleiche Vorteil wird bei einer Rolle 10 gemäß Fig. 4 erreicht. Die Lauffläche 17 dieser Rolle 10 ist mit einer umlaufenden Rille 19 ausgebildet. Diese Rille 19 weist über ihren gesamten Querschnitt eine konkav gekrümmte Form auf.

Mit Ansetzen des Wagenhebers umgreift diese Rille 19 einen Wulst 20. Der Wulst 20 kann, ebenso wie die Ausnehmung 14 gemäß Fig. 4, direkt beispielsweise in das Bodenblech oder in den Schweller eingeprägt sein. Wulst 20 oder Ausnehmung 14 können jedoch auch, wie dargestellt, in oder an einem Aufnahmeteil 13 angeordnet sein, welches mit dem Boden oder Schweller verbunden ist. Der Wulst 20 kann in Längserstreckung, ähnlich wie die in Fig. 1 gezeigte Wand 15, eine konkave Form haben. Er kann aber auch linear verlaufen, wobei dann für die Lage der Rolle 10 Fixierungseinrichtungen, wie z.B. aufgeklemmte Kunststoffstücke, vorgesehen werden müssen.

### Bezugszeichenliste

- 1.: Standsäule
- 2.: Fuß
- 3.: Untergrund
- 4.: Tragarm
- 5.: Ende
- 6.: Bewegungsspindel
- 7.: Ende
- 8.: Bewegungsmutter
- 9.: Handkurbel
- 10.: Rolle
- 11.: Achse
- 12.: Boden
- 13.: Aufnahmeteil
- 14.: Ausnehmung
- 15.: Wand
- 16.: Mittelsteg
- 17.: Lauffläche
- 18.: Seite
- 19.: Rille
- 20.: Wulst

## Patentansprüche

1. Wagenheber mit einem auf dem Untergrund (3) stehenden Standkörper, bestehend aus Standsäule (1) und Fuß (2), und einem an der Standsäule (1) um eine festgelegte horizontale Schwenkachse beweglich befestigten Tragarm (4), der direkt oder indirekt von einer Bewegungsspindel (6) gegenüber dem Untergrund (3) angehoben oder abgesenkt wird und an seinem freien Ende (5) ein festes oder schwenkbewegliches Tragelement trägt, das einen konvex bogenförmigen Adapterkopf aufweist, **dadurch gekennzeichnet, dass** eine oder mehrere drehbare Rollen (10) als bogenförmiger Adapterkopf am freien Ende (5) des Tragarms (4) angeordnet sind.

2. Wagenheber nach Anspruch 1, **dadurch gekennzeichnet, dass** der konvex bogenförmige Adapterkopf eine umlaufende Rille (19) aufweist, mit der er einen in Längserstreckung konkaven oder linearen Wulst (20) umgreifen kann.

3. Wagenheber nach Anspruch 1 oder 2, **dadurch gekennzeichnet, dass** der Tragarm (4) einen U-förmigen Querschnitt aufweist und der bogenförmige Adapterkopf am freien Ende (5) des Tragarms (4) zwischen dessen Seitenschenkeln angeordnet ist.

4. Wagenheber nach einem oder mehreren der Ansprüche 1 bis 3, **dadurch gekennzeichnet, dass** zwei bogenförmige Adapterköpfe seitlich neben den Außenwänden des freien Endes (5) des Tragarms (4) angeordnet sind.

5. Wagenheber nach einem oder mehreren der Ansprüche 1 bis 4, **dadurch gekennzeichnet, dass** die Lauffläche (17) der Rolle (10) oder der Rollen (10) ballig ausgebildet ist oder sind.

## Claims

1. Vehicle jack having a stand body which stands on the ground (3) and consists of a stand column (1) and foot (2), and having a support arm (4) which is attached to the stand column (1) in such a way as to be moveable about a fixed horizontal pivot axis and which is raised or lowered with respect to the ground (3) directly or indirectly by a movement spindle (6) and has a fixed or pivotable support element at its free end (5), which support element has a convexly arcuate adapter head, **characterised in that** one or a plurality of rotatable rollers (10) are disposed as an arcuate adapter head at the free end (5) of the support arm (4).

2. Vehicle jack as claimed in claim 1, **characterised in that** the convexly arcuate adapter head has a peripheral channel (19) with which it can engage around a bead (20) which is concave or linear in its longitudinal extension.

3. Vehicle jack as claimed in claim 1 or 2, **characterised in that** the support arm (4) has a U-shaped cross-section and the arcuate adapter head is disposed at the free end (5) of the support arm (4) between the side limbs thereof.

4. Vehicle jack as claimed in any one or several of claims 1 to 3, **characterised in that** two arcuate adapter heads are disposed laterally next to the outer walls of the free end (5) of the support arm (4).

5. Vehicle jack as claimed in any one or several of claims 1 to 4, **characterised in that** the running surface (17) of the roller (10) or of the rollers (10) is or are formed in a crowned manner.

## Revendications

1. Cric pour véhicule, avec une structure de soutien reposant sur le sol (3), constituée d'une colonne de soutien (1) et d'un pied (2), et un bras de support (4), fixé à la colonne de soutien (1) de manière mobile autour d'un axe de pivotement horizontal fixe, qui peut être soulevé ou abaissé de manière directe ou indirecte, vis-à-vis du sol (3), par une tige filetée (6), et qui porte à son extrémité libre (5) un organe de support fixe ou mobile en pivotement, qui présente une tête d'adaptation arquée, convexe, **caractérisé en ce qu'**un ou plusieurs rouleaux rotatifs (10) sont disposés à l'extrémité libre (5) du bras de support (4), en tant que tête d'adaptation arquée.

2. Cric pour véhicule selon la revendication 1, **caractérisé en ce que** la tête d'adaptation arquée, convexe, présente une rainure périphérique (19), avec laquelle elle peut agripper un bourrelet (20) concave ou droit dans le sens longitudinal.

3. Cric pour véhicule selon la revendication 1 ou 2, **caractérisé en ce que** le bras de support (4) présente une section transversale en U, et la tête d'adaptation arquée est agencée à l'extrémité libre (5) du bras de support (4), entre ses ailes latérales.

4. Cric pour véhicule selon une ou plusieurs des revendications 1 à 3, **caractérisé en ce que** deux têtes d'adaptation arquées sont agencées latéralement à côté des parois externes de l'extrémité libre (5) du bras de support (4).

5. Cric pour véhicule selon une ou plusieurs des revendications 1 à 4, **caractérisé en ce que** la surface de roulement (17) du ou des rouleaux (10) est bombée.
